# EUROPEAN PATENT SPECIFICATION

(11) **EP 4 595 478 B1**
(45) Date of publication and mention of the grant of the patent: **04.11.2026**
(21) Application number: 22847623.0
(22) Date of filing: 28.09.2022
(51) Int. Cl.: H04W 4/50, H04L 43/16, H04L 41/5009, H04L 41/0816, H04L 41/5025, H04W 24/02, H04W 24/04

(54) **MANAGING CONFLICTS BETWEEN RADIO ACCESS NETWORK AUTOMATION APPLICATIONS IN A COMMUNICATION NETWORK**
KONFLIKTVERWALTUNG ZWISCHEN ANWENDUNGEN DER FUNKZUGANGSNETZAUTOMATISIERUNG IN EINEM KOMMUNIKATIONSNETZ
GESTION DES CONFLITS ENTRE LES APPLICATIONS D'AUTOMATISATION DES RÉSEAUX D'ACCÈS RADIO DANS UN RÉSEAU DE COMMUNICATION

(43) Date of publication of application: 06.08.2025
(73) Proprietor: Telefonaktiebolaget LM Ericsson (publ), 164 83 Stockholm (SE)
(72) Inventor: SILVERFORSEN, Kasper, 121 46 Stockholm (SE); KERDONCUFF, Tanguy, 69006 Lyon (FR); BAGAYOKO, Abdoulaye, 92250 La Garenne Colombes (FR); GARCIA RODRIGUEZ, Adrian, 75015 Paris (FR)
(74) Representative: Ericsson
(86) International application number: PCT/IB2022/000730
(87) International publication number: WO 2024/069208

(56) References cited:
- WO-A1-2022/089725
- CN-A- 115 119 331
- JP-A- 2022 105 306
- ANONYMOUS: "O-RAN Working Group 3, Near-Real-time RAN Intelligent Controller, Near-RT RIC Architecture", no. O-RAN.WG3.RICARCH-v01.01, 31 October 2020 (2020-10-31), pages 1 - 23, XP009539266, Retrieved from the Internet <URL:https://orandownloadsweb.azurewebsites.net/specifications>

## Description

### Technical Field

The present disclosure relates to methods for managing conflicts between Radio Access Network Automation Applications (rApps), in a communication network. The method may be performed by a management node, and the present disclosure also relates to a management node, and to a computer program product configured, when run on a computer, to carry out methods for managing conflicts between rApps in a communication network.

### Background

The Open Radio Access Network (O-RAN) architecture introduces two types of applications to realize different RAN automation and management use cases: xApps, for near Real Time automation (near-RT), and rApps, for non Real Time (non-RT) automation. For the purposes of the present disclosure, "rApps" will be used as an umbrella term to refer both to rApps and to xApps. rApps may be independently designed by different vendors, meaning that conflicts can be created when different rApps execute independent actions. These conflicts result in network performance degradation, and instabilities that may introduce network vulnerabilities that could be exploited by security threat actors. A conflict mitigation function is expected to be implemented to adequately identify and address conflicts between rApps.

The O-RAN Security Focus Group (SFG) carried out a security study for the Non-RT RAN Intelligent Controller (Non-RT RIC), which highlighted the major security threats for rApps (O-RAN Security Focus Group (SFG): Study on Security for Non-RT-RIC, O-RAN.SFG.Non-RT-RIC-Security-TR-v00.01.01). Conflict issues between various rApps were identified in the study as a major security threat that could lead to Denial of Service (DoS).

Three types of rApp conflict have been identified, for example in "Security Considerations of Open RAN: Ensuring network radio systems are open, interoperable, and secure by design", August 2020, online: Security considerations of Open RAN - Ericsson. Link: https://www.ericsson.com/en/security/security-considerations-of-open-ran?utm_source=facebook&utm medium=social organic&utm campaign=Networks MANA Radio System-Antenna System 20200819:
Direct conflicts, in which different rApps attempt to modify the value of the same parameter,
Indirect conflicts, in which different rApps request changes to different parameters that will create opposite effects, and
Implicit conflicts, in which different rApps request changes to different parameters that are not creating any obvious opposite effect, but result in an overall network performance degradation, instabilities, etc.

Indirect and implicit conflicts are especially difficult to mitigate, owing to their lack of observability, and while a conflict mitigation function is expected to be implemented to adequately identify and address these conflicts, no known solutions are currently available.

Document XP 009539266 discloses conflict mitigation that is about addressing conflicting interactions between different xApps. Indirect conflicts can be resolved by post-action verification. Here, the actions are executed and the effects on the target metric are observed. Based on the observations, the system has to decide on potential corrections, e.g., rolling back one of the xApp actions.

### Summary

It is an aim of the present disclosure to provide methods, a management node, and a computer program product which at least partially address one or more of the challenges mentioned above. It is a further aim of the present disclosure to provide methods, a management node and a computer program product which facilitate rApp conflict mitigation in a communication network.

According to a first aspect of the present disclosure, there is provided a method for managing conflicts between rApps in a communication network, wherein an rApp is configured to execute at least one action on at least one parameter within the communication network. The method, performed by a management node, comprises, on fulfilment of a network performance degradation condition following deployment of a new rApp in the network, selecting a candidate rApp from among rApps previously deployed in the network. The method further comprises, during a first time period, modifying a rate at which the candidate rApp can execute one or more candidate actions on parameters in the network, and comparing a measure of network performance during the first time period to a measure of network performance during at least one reference time period. The method further comprises, if a network performance improvement condition is satisfied with respect to the measure of network performance during the at least one reference time period, generating an rApp conflict alert identifying the new rApp and the candidate rApp, and, in a graph of rApps in the network, incrementing a weight of edges connecting nodes representing parameters on which actions of the new rApp are executed and nodes representing parameters on which the one or more candidate actions are executed.

According to another aspect of the present disclosure, there is provided a computer program product comprising a computer readable non-transitory medium, the computer readable medium having computer readable code embodied therein, the computer readable code being configured such that, on execution by a suitable computer or processor, the computer or processor is caused to perform a method according to any one of the aspects or examples of the present disclosure.

According to another aspect of the present disclosure, there is provided a management node for managing conflicts between rApps in a communication network, wherein an rApp is configured to execute at least one action on at least one parameter within the communication network. The management node comprises processing circuitry configured to cause the management node to, on fulfilment of a network performance degradation condition following deployment of a new rApp in the network, select a candidate rApp from among rApps previously deployed in the network. The processing circuitry is further configured to cause the management node to, during a first time period, modify a rate at which the candidate rApp can execute one or more candidate actions on parameters in the network, and compare a measure of network performance during the first time period to a measure of network performance during at least one reference time period. The processing circuitry is further configured to cause the management node to, if a network performance improvement condition is satisfied with respect to the measure of network performance during the at least one reference time period, generate an rApp conflict alert identifying the new rApp and the candidate rApp, and, in a graph of rApps in the network, increment a weight of edges connecting nodes representing parameters on which actions of the new rApp are executed and nodes representing parameters on which the one or more candidate actions are executed.

Aspects of the present disclosure thus provide methods and nodes that enable identification of indirect and implicit conflicts through modification of the behavior of deployed rApps in order to identify which rApps may be generating a conflict that is causing performance degradation, and allowing for measures to be taken to mitigate the conflict. According to different examples of the present disclosure, conflicts can be identified both pre and post deployment of an rApp.

### Brief Description of the Drawings

For a better understanding of the present disclosure, and to show more clearly how it may be carried into effect, reference will now be made, by way of example, to the following drawings in which:
Figure 1 is a flow chart illustrating process steps in a method for managing conflicts between rApps in a communication network;
Figures 2a to 2f show flow charts illustrating another example of a method for managing conflicts between rApps in a communication network;
Figure 3 is a block diagram illustrating functional modules in an example management node;
Figure 4 is a block diagram illustrating functional modules in another example management node;
Figures 5 and 6 are flow charts illustrating a process flow for before and after deployment of a new rApp respectively;
Figure 7 illustrates in greater detail how one of the steps in Figure 6 may be implemented;
Figure 8 illustrates a simple representation of an example rApp graph;
Figure 9 illustrates traversal of an rApp graph; and
Figures 10, 11 and 12 illustrate an implementation of the process flow of Figure 6.

### Detailed Description

Examples of the present disclosure propose methods that enable the identification and management of different types of conflict between rApps in a communication network.

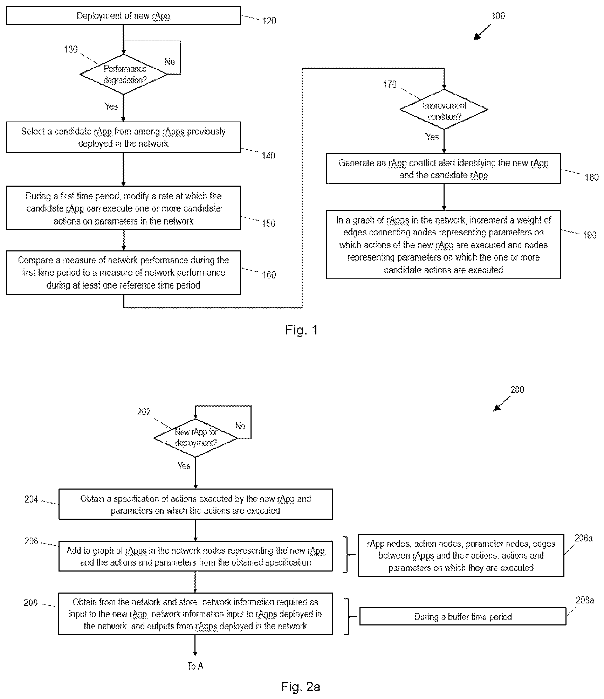

Figure 1 is a flow chart illustrating process steps in a method 100 for managing conflicts between rApps in a communication network. As discussed above, for the purposes of the present disclosure, "rApps" is considered to encompass within its scope both non-RT rApps and near-RT xApps. For the purposes of the method 100, an rApp is configured to execute at least one action on at least one parameter within the communication network. Examples of rApps may include beam forming rApps (including both rApps and xApps), which vary a number of beams, beam elevation, beam horizontal and vertical widths and power allocation of beams. Examples of rApps may also include optimization rApps (including both rApps and xApps) in which the parameter for optimization may be antenna tilt or nay other managed parameter.

The method 100 is performed by a management node, which may comprise a physical or virtual node, and may be implemented in a computer system, computing device or server apparatus and/or in a virtualized environment, for example in a cloud, edge cloud or fog deployment. Examples of a virtual node may include a piece of software or computer program, a code fragment operable to implement a computer program, a virtualised function, or any other logical entity. The management node may for example be implemented in a core network of the communication network, and may be implemented in an Operation Support System (OSS), an Orchestration And Management (OAM) system, or in a Service Management and Orchestration (SMO) system. The management node may for example be implemented as part of a conflict resolution function in an SMO of an O-RAN architecture. The management node may encompass multiple logical entities, as discussed in greater detail below, and may for example comprise a Virtualised Network Function (VNF).

Referring to Figure 1, the method 100 comprises, on fulfilment of a network performance degradation condition 130, following deployment 120 of a new rApp in the network, selecting in step 140 a candidate rApp from among rApps previously deployed in the network. It will be appreciated that a single rApp may be configured to execute more than one action, and, as discussed above, each action is executed on a parameter of the communication network, for example to change the parameter value.

The method further comprises, during a first time period, modifying a rate at which the candidate rApp can execute one or more candidate actions on parameters in the network in step 150. The one or more candidate actions of the candidate rApp may comprise the sole action executed by the rApp, in the event that the rApp executes only a single action. Alternatively, the one or more candidate actions of the candidate rApp may comprise all actions executed by the candidate rApp, or may comprise a specific one or more actions selected from among the actions executed by the candidate rApp. In step 160, the method 100 comprises comparing a measure of network performance during the first time period to a measure of network performance during at least one reference time period. The method then comprises, if a network performance improvement condition is satisfied at step 170 with respect to the measure of network performance during the at least one reference time period, generating an rApp conflict alert identifying the new rApp and the candidate rApp in step 180. The method 100 further comprises, in a graph of rApps in the network, incrementing a weight of edges connecting nodes representing parameters on which actions of the new rApp are executed and nodes representing parameters on which the one or more candidate actions are executed in step 190.

The method 100 thus modifies behavior of rApps deployed in the network by selecting a candidate rApp, and optionally one or more actions executed by the rApp, modifying the rate at which the candidate rApp can execute one or more of its atcions, and checking for impact on performance to identify a conflict, which may be direct, indirect, or implicit. As discussed in further detail below, direct conflicts, as well as significant risk for indirect and implicit conflicts, may in some examples be identified before deployment of the rApp, using the graph that is updated in step 190. The graph represents rApps in the network, and is updated by incrementing edge weight(s) in order to reflect the identified conflict.

The method 100 makes use of a network performance degradation condition, which may comprise a deterioration in a measure of network performance that is greater than a threshold value. In addition, the condition may require that the deterioration does not follow a pattern that has previously been observed in the network, and so can reasonably be attributed to deployment of the new rApp. The method 100 is executed "following deployment of a new rApp in the network", and in some examples, a time limit may be established for the period of time that constitutes "following deployment". For example, "following deployment of a new rApp" may define a fixed period of time from deployment of the new rApp up to expiry of a time limit. The time limit may be set by an operator or administrator of the network. The purpose of executing the method during this time period "following deployment" of a new rApp, is to concentrate on identifying degradations of network performance that can reasonably be attributed to deployment of the new rApp. The network operator or administrator may therefore select the time limit (and hence the duration of this time period) such that there may be a reasonable degree of confidence that if the newly deployed rApp were to cause a conflict, the effects of that conflict would be visible in the network performance before the end of the time period. A reasonable degree of confidence may be defined according to specifics of a given deployment, and may be based for example on how often the rApp is expected to execute its action(s), how often other rApp in the network execute their actions, and consequently the probability of any possible conflict arising within the time period.

Step 190 of the method 100 comprises incrementing a weight of edges connecting nodes representing parameters on which actions of the new rApp are executed and nodes representing parameters on which the one or more candidate actions are executed. This incrementing step may comprise incrementing weights of all edges connecting all parameters impacted by the new rApp and all parameters on which the one or more candidate actions are executed.

Figures 2a to 2g show flow charts illustrating another example of a method 200 for managing conflicts between rApps in a communication network, wherein an rApp is configured to execute at least one action on at least one parameter within the communication network. As for the method 100 discussed above, the method 200 is performed by a management node, which may comprise a physical or virtual node, and may be implemented in a computer system, computing device or server apparatus and/or in a virtualized environment, for example in a cloud, edge cloud or fog deployment. The management node may for example be implemented as part of a conflict resolution function in an SMO of an O-RAN architecture. The management node may encompass multiple logical entities, as discussed in greater detail below, and may for example comprise a Virtualised Network Function (VNF). The method 200 illustrates examples of how the steps of the method 100 may be implemented and supplemented to provide the above discussed and additional functionality.

Referring initially to Figure 2a, the method 200 is initiated on determining that a new rApp is to be deployed into the network at step 202. In step 204, and prior to deployment of the new rApp, the management node obtains a specification of actions executed by the new rApp, and parameters on which the actions are executed. The specification may be obtained for example using documentation mining techniques, such as those implemented using Machine Learning, or by extracting fields from known document templates. The management node then adds nodes representing the new rApp and the actions and parameters from the obtained specification to a graph of rApps in the network at step 206. As illustrated at 206a, adding the nodes in step 206 may also comprise adding edges connecting the new rApp to its actions, and connecting each action to the parameters on which the action is executed. In some examples, it may be that the new rApp is the first rApp to be deployed in the network. In such examples, and in other situations, it may be that the graph of rApps in the network does not exist. In such cases, the step 206 of adding nodes representing the new rApp, action(s) and parameter(s) may further comprise initiating the graph of rApps in the network.

In step 208, the management node then obtains from the network and stores both network information required as input to the new rApp, and network information input to rApps deployed in the network. The management node also obtains outputs from rApps deployed in the network. As illustrated at 208a, the management node obtains the information and outputs during a buffer time period. The duration of this time period may be dependent on particular network deployments, and may be established by a network operator or administrator.

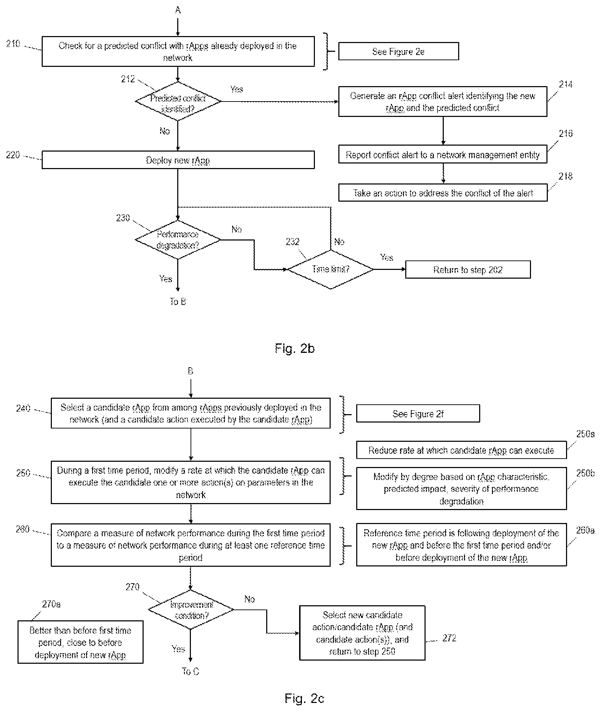

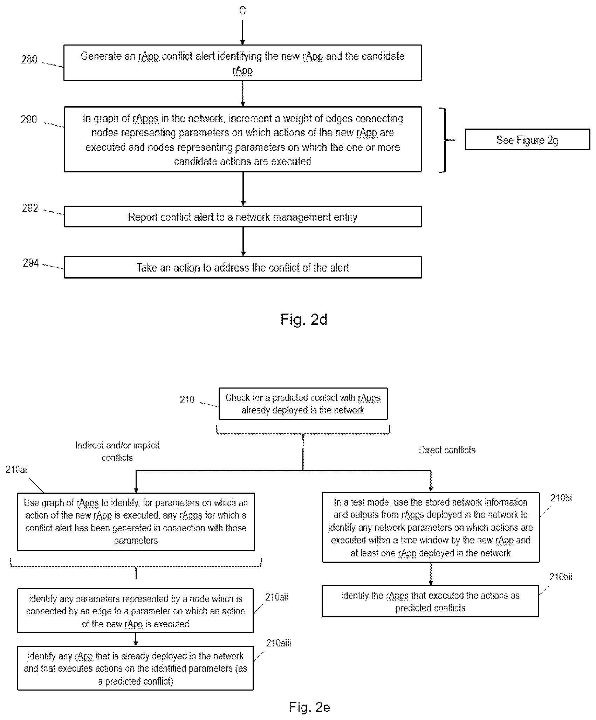

Referring now to Figure 2b, the management node then checks for a predicted conflict with rApps already deployed in the network in step 210. Steps that may be performed in order to carry out the check for predicted conflict at step 210 are illustrated in Figure 2e.

Referring to Figure 2e, as part of checking for a predicted conflict with rApps already deployed in the network at step 210, the management node may check for both direct conflicts (implementing steps on the right of Figure 2e), and indirect and/or implicit conflicts (implementing steps on the left of Figure 2e).

Considering initially the direct conflicts, at step 210bi, the management node uses the stored network information and outputs from rApps deployed in the network to identify any network parameters on which actions are executed within a time window by the new rApp and at least one rApp deployed in the network. This check is performed in a test mode, effectively rerunning the network operation from the buffer time period but this time including the impact of the new rApp for deployment. Storing the network information that would be used by the new rApp as input allows the management node to determine what actions the new rApp would have executed, and on what parameters, during the buffer time period. The management node can therefore check whether the new rApp would have attempted to modify any of the same parameters as were modified by the existing rApps in the network, within a time window. The time window may be defined by a network operator or administrator, and may be sufficiently small as to encompass actions that are executed on the same parameter by different rApps in such quick succession as to be considered as substantially contemporaneous, and consequently being a direct conflict. In step 210bii, the management node identifies the rApps that executed the actions as predicted conflicts.

Considering now indirect and implicit conflicts, in step 210ai, the management node uses the graph of rApps in the network to identify, for parameters on which an action of the new rApp is executed, any rApps for which a conflict alert has been generated in connection with those parameters. Any identified rApp comprises a predicted conflict.

Identifying rApps using the graph in step 210ai may be achieved by the management node through executing steps 210aii and 210aiii. In step 210aii, the management node initially identifies any parameters represented by a node in the graph which is connected by an edge to a parameter on which an action of the new rApp is executed. In step 210aiii, the management node then identifies any rApp that is already deployed in the network and that executes actions on the identified parameters as a potential conflict. As discussed above with reference to the method 100, an edge weight between parameters is incremented any time a conflict is identified following deployment of an rApp. A graph edge between a node representing a parameter on which the new rApp executes an action, and a node representing another parameter in the network, therefore indicates that a conflict between rApps executing actions on these parameters has been identified in the past, and indicates that a possible future conflict may arise on deployment of the new rApp.

Referring again to Figure 2b, and following checking in step 210 for predicted conflicts with rApps already deployed in the network, the management node determines at step 212 whether or not a predicted conflict has been found. If a predicted conflict has been identified, the management node generates an rApp conflict alert identifying the new rApp and the predicted conflict in step 214. An rApp conflict alert may indicate severity of conflict, for example flagging a predicted conflict as direct or not direct (indirect or implicit). In addition, for indirect or implicit conflicts, a measure of conflict severity may be included based on, for example, aggregated weight of edge connections between the new rApp and the conflict rApp.

The management node may additionally report the conflict alert to a network management entity such as an operator or administrator, or another management function, in step 216, and/or take an action to address the conflict of the alert. Example options for this action include delaying or aborting deployment of the rApp.

If no predicted conflict has been identified, or following resolution of any predicted conflict, the new rApp is deployed into the network at step 220. The management node then proceeds to check for a degradation in performance that fulfils a performance degradation condition in step 230. As discussed above with reference to the method 100, the network performance degradation condition may comprise a deterioration in a measure of network performance that is greater than a threshold value, and in some examples also does not follow a pattern that has previously been observed in the network, and so can reasonably be attributed to deployment of the new rApp.

The management node checks for fulfillment of the performance degradation condition until a time limit (the time limit associated with the duration of a period of time "following deployment of the new rApp") is reached at step 232. If the performance degradation condition is not fulfilled before expiry of this time limit, then it may be concluded that the new rApp is not in conflict with any of the other rApps deployed in the network, and so the management node may return to step 202 to await another rApp for deployment.

If the network performance degradation condition is fulfilled before expiry of the time limit, and referring to Figure 2c, the management node then selects a candidate rApp from among rApps previously deployed in the network at step 240. The management node may in some examples also select one or more candidate actions executed by the candidate rApp, at step 240. The candidate rApp may execute any number of actions, which may range from a single action to a plurality of actions. In some examples, the one or more candidate actions may comprise the sole or all actions executed by the candidate rApp, in which examples the selection of candidate actions may be omitted, and the management node may simply select the candidate rApp at step 240. In other examples, the management node may select a specific one or more of the actions executed by the candidate rApp to be candidate actions.

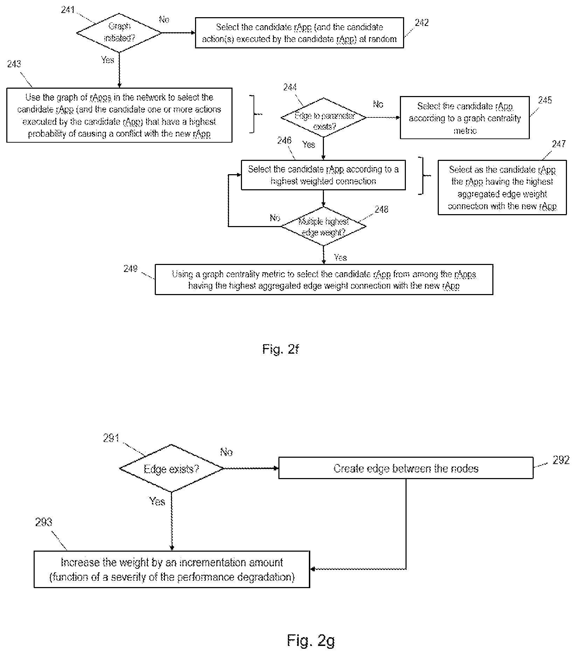

Steps that may be performed in order to carry out the selection of a candidate rApp, and action if selected, at step 240 are illustrated in Figure 2f.

Referring to Figure 2f, the management node checks in step 241 whether or not the graph of rApps in the network has already been initiated. If the graph of rApps in the network has not yet been initiated, the management node selects the candidate rApp, and the one or more candidate actions executed by the candidate rApp if these actions are to be selected, at random in step 242.

If the graph of rApps in the network has been initiated, the management node uses the graph of rApps in the network to select the candidate rApp, and the candidate one or more actions if these are to be selected, that have a highest probability of causing a conflict with the new rApp in step 243. The management node may make the selection of step 243 using the graph by carrying out steps 244 to 249.

In step 244, the management node checks whether at least one edge exists in the graph connecting a node representing a parameter on which an action of the new rApp is executed to a node representing a parameter on which an action of another rApp in the network is executed. If no such edge exists, the management node selects the candidate rApp according to a graph centrality metric in step 245.

If at least one edge exists in the graph connecting a node representing a parameter on which an action of the new rApp is executed to a node representing a parameter on which an action of another rApp in the network is executed, the management node selects the candidate rApp according to a highest weighted connection between nodes representing parameters on which actions of the candidate rApp are executed and any node representing a parameter on which an action or actions of the new rApp are executed in step 246. As illustrated at step 247, this may comprise selecting as the candidate rApp the rApp having the highest aggregated edge weight connection with the new rApp. In some examples, this may be achieved by aggregating the edge weights of all edges connecting any parameter related to an rApp with any parameter related to the new rApp, wherein relation is defined by an action of the rApp being executed on the parameter.

As illustrated in step 248, if more than one rApp has the highest aggregated edge weight connection with the new rApp, the management node may use a graph centrality metric at step 249 to select the candidate rApp from among the rApps having the highest aggregated edge weight connection with the new rApp. Having selected a candidate rApp, the management node may proceed immediately to the following steps, in which case all of the one or more actions executed by the candidate rApp will be candidate actions. Alternatively, the management node may select one or more candidate actions of the candidate rApp. As for the candidate rApp selection, selection of candidate actions may be based on edge weights, for example selecting as candidate action(s) the action or actions that are executed by the candidate rApp on parameters having the highest edge weight connection to a parameter on which an action of the new rApp is executed.

Referring again to Figure 2c, and following selection of a candidate rApp, and candidate one or more actions in some examples, in step 240, the management node performs step 250, which comprises, during a first time period, modifying a rate at which the candidate rApp can execute the candidate one or more actions on parameters in the network. As illustrated at step 250, this may comprise reducing the rate at which the candidate rApp can execute the one or more candidate actions on parameters in the network.

As illustrated at step 250b, modifying a rate at which the candidate rApp can execute the one or more candidate actions on parameters in the network comprises a modifying the rate by a degree, or amount, that is based on at least one of:
a characteristic of the candidate rApp;
a predicted impact on the network of the modification;
a severity of the performance degradation.

A characteristic of the candidate rApp may include an assigned priority of the candidate rApp, a number of previously identified conflicts implicating the candidate rApp, etc. For example, an rApp having a high priority may only have its rate modified by a small amount, when compared to an rApp that has a lower priority. A predicted impact of the modification may comprise an impact on network performance, financial costs, etc., and severity of performance degradation may also take account of financial cost. A very severe performance degradation, or a very large predicted impact on network performance of the modification, may justify a greater degree of rate modification. The degree by which the rate is modified may include a size of modification, a rate of modification, etc.

In step 260, the management node compares a measure of network performance during the first time period to a measure of network performance during at least one reference time period. As illustrated at 260a, the at least one reference time period may comprise at least one of a time period following deployment of the new rApp and before the first time period, and/or a time period prior to deployment of the new rApp. The reference time period enables a performance comparison to made, so as to determine whether the rate modification has reduced or otherwise impacted the performance degradation that followed deployment of the new rApp. If that is the case, then the candidate rApp is likely to be the source of the conflict with the new rApp.

In step 270, the management node checks whether or not a network performance improvement condition is satisfied with respect to the measure of network performance during the at least one reference time period. As illustrated at 270a, the performance improvement condition may comprise an improvement in the measure of network performance during the first time period which is at least one of:
over a first threshold value with respect to the measure of network performance during a time period following deployment of the new rApp and before the first time period; and/or
within a second threshold value with respect to the measure of network performance during a time period prior to deployment of the new rApp.

The first possible criterion for the performance improvement condition thus relates to improving performance from the degraded level after deployment of the new rApp but before the rate modification of the first time period. The second possible criterion for the performance improvement condition relates to regaining a performance level that is close to that which was measured before deployment of the new rApp.

If the network performance improvement condition is not satisfied with respect to the measure of network performance during the at least one reference time period, then it may be concluded that the candidate rApp is not the source of the conflict, or at least not the primary or most important conflict, with the new rApp. In this case, the management node may then, at step 272, select at least one of a new candidate action executed by the candidate rApp (for example if candidate action selection was performed at step 240), or a new candidate rApp (and in some examples one or more candidate actions), and return to step 250 in order to repeat steps 250 to 270 for the newly selected rApp (and actions if selected). The management node may additionally exclude the action and/or rApp that have just been considered from future selection as candidates with respect to the new rApp currently under consideration. In some examples, the management node may for example assemble a set of rApps that are eligible to be candidates, and then perform the selection step 240 from only that set. rApps that have already been tested via steps 250 to 270, and found not to be a conflict, may therefore be removed from the set to prevent their reselection. This use of a set of rApps that are eligible for selection as candidates may also facilitate protection or ring fencing of rApps considered to be critical to network performance, and thus exempt from rate modification. In other examples, such protection may be achieved through use of priority levels for rApps as discussed above, with the highest priority level imposing a rate modification of zero for the relevant rApp.

Referring now to Figure 2d, if the network performance improvement condition is satisfied with respect to the measure of network performance during the at least one reference time period, the management node then generates an rApp conflict alert identifying the new rApp and the candidate rApp in step 280. In step 290, the management node increments, in the graph of rApps, a weight of edges connecting nodes representing parameters on which actions of the new rApp are executed and nodes representing parameters on which the candidate action is executed.

Steps that may be performed in order to carry out the incrementation at step 290 are illustrated in Figure 2g.

Referring to Figure 2g, incrementing a weight of edges connecting nodes representing parameters on which actions of the new rApp are executed and nodes representing parameters on which the one or more candidate actions are executed first comprises checking, at step 291 whether or not an edge already exists in the graph connecting a node representing a parameter on which an action of the new rApp is executed and a node representing a parameter on which one or more of the candidate actions is executed. If no such edge exists, the management node creates an edge between the nodes in step 292.

Having created the edge in step 292, or if an edge exists in the graph connecting a node representing a parameter on which an action of the new rApp is executed and a node representing a parameter on which one or more of the candidate actions is executed, the management node increases the weight of the edge by an incrementation amount, wherein the incrementation amount is a function of a severity of the performance degradation.

It will be appreciated that by incrementing the edge weight, and having the amount of incrementation dependent on severity, it may be ensured that the overall weight is a function both of the number of identified conflicts and the severity of those conflicts in terms of their impact on network performance. This may assist with identifying predicted conflicts for future rApps using the graph, and in determining how to action such predicted conflicts. For example, if at step 210aii, the management node identifies that a parameter node in the graph for the new rApp for deployment is connected to another parameter node by an edge with only a very small edge weight, it may be determined to proceed with deployment, on the basis that the very small edge weight indicates a low risk of conflict, and/or a conflict having only minor performance impact. Similarly, if at step 210aii, the management node identifies that a parameter node in the graph for the new rApp for deployment is connected to one parameter node by an edge with only a very small edge weight, and to another parameter node with a very large edge weight, it may be determined that the rApp acting on the parameter to associated with the large edge weight represents the more significant predicted conflict, and should be the subject of appropriate action to mitigate the conflict. It will be appreciated that thresholds for edge weights may in some examples be used to manage this identification of predicted conflicts and selection of appropriate actions. The edge weights may also be included in a predicted conflict alert.

Referring again to Figure 2d, following incrementation of edge weights, the management node then performs at least one of step 292, reporting the conflict alert to a network management entity, and/or step 294, taking an action to address the conflict of the alert. The action may for example include pausing or modifying either the new rApp or the already deployed rApp with which there is a conflict.

As discussed above, the methods 100 and 300 may be performed by a management node, and the present disclosure provides a management node that is adapted to perform any or all of the steps of the above discussed methods. The management node may comprise a physical node such as a computing device, server etc., or may comprise a virtual node. A virtual node may comprise any logical entity, such as a Virtualized Network Function (VNF) which may itself be running in a cloud, edge cloud or fog deployment. The management node may be operable to be instantiated in a cloud based deployment. In one example, the management node may be instantiated as part of a conflict resolution function in an SMO of an O-RAN architecture.

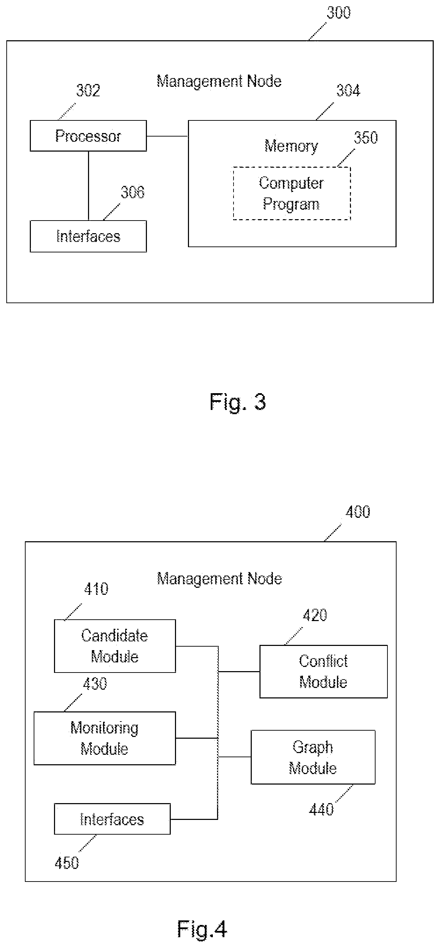

Figure 3 is a block diagram illustrating an example management node 300 which may implement the method 100 and/or 200, as illustrated in Figures 1 and 2a to 2g, according to examples of the present disclosure, for example on receipt of suitable instructions from a computer program 350. Referring to Figure 3 the management node 300 comprises a processor or processing circuitry 302, and may comprise a memory 304 and interfaces 306. The processing circuitry 302 is operable to perform some or all of the steps of the method 100 and/or 200 as discussed above with reference to Figures 1 and 2a to 2g. The memory 304 may contain instructions executable by the processing circuitry 302 such that the management node 300 is operable to perform some or all of the steps of the method 100 and/or 200, as illustrated in Figures 1 and 2a to 2g. The instructions may also include instructions for executing one or more telecommunications and/or data communications protocols. The instructions may be stored in the form of the computer program 350. In some examples, the processor or processing circuitry 302 may include one or more microprocessors or microcontrollers, as well as other digital hardware, which may include digital signal processors (DSPs), special-purpose digital logic, etc. The processor or processing circuitry 302 may be implemented by any type of integrated circuit, such as an Application Specific Integrated Circuit (ASIC), Field Programmable Gate Array (FPGA) etc. The memory 304 may include one or several types of memory suitable for the processor, such as read-only memory (ROM), random-access memory, cache memory, flash memory devices, optical storage devices, solid state disk, hard disk drive, etc. The interfaces 306 may be operable to facilitate communication with other nodes or modules, over suitable communication channels.

Figure 4 illustrates functional modules in another example of management node 400 which may execute examples of the methods 100 and/or 200 of the present disclosure, for example according to computer readable instructions received from a computer program. It will be understood that the modules illustrated in Figure 4 are functional modules, and may be realized in any appropriate combination of hardware and/or software. The modules may comprise one or more processors and may be integrated to any degree.

Referring to Figure 4, the management node 400 is for managing conflicts between rApps in a communication network, wherein an rApp is configured to execute at least one action on at least one parameter within the communication network. The management node 400 comprises a candidate module 410 for, on fulfilment of a network performance degradation condition following deployment of a new rApp in the network, selecting a candidate rApp from among rApps previously deployed in the network. The management node further comprises a conflict module 420 for, during a first time period, modifying a rate at which the candidate rApp can execute one or more candidate actions on parameters in the network. The management node further comprises a monitoring module 430 for comparing a measure of network performance during the first time period to a measure of network performance during at least one reference time period. The conflict module 420 is also for, if a network performance improvement condition is satisfied with respect to the measure of network performance during the at least one reference time period, generating an rApp conflict alert identifying the new rApp and the candidate rApp. The management node further comprises a graph module 440 for, if the network performance improvement condition is satisfied with respect to the measure of network performance during the at least one reference time period, in a graph of rApps in the network, incrementing a weight of edges connecting nodes representing parameters on which actions of the new rApp are executed and nodes representing parameters on which the one or more candidate actions are executed. The management node 400 may further comprise interfaces 450, which may be operable to facilitate communication with other nodes or modules, over suitable communication channels.

Figures 1 to 2g discussed above provide an overview of methods which may be performed according to different examples of the present disclosure. These methods may be performed by a management node as illustrated in Figures 3 and 4. The methods enable the management, including identification, of conflicts between rApps in a communication network. There now follows a detailed discussion of how different process steps illustrated in Figures 1 to 2g and discussed above may be implemented. The functionality and implementation detail described below is discussed with reference to the modules of Figures 3 and 4 being instantiated within a conflict resolution function of an O-RAN SMO, and performing examples of the methods 100 and 200, substantially as described above.

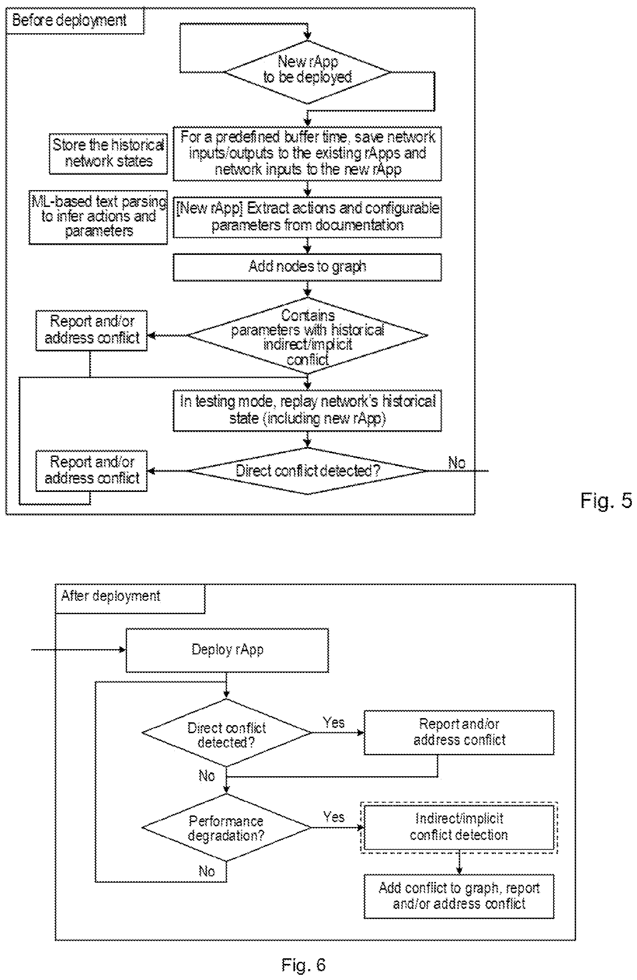

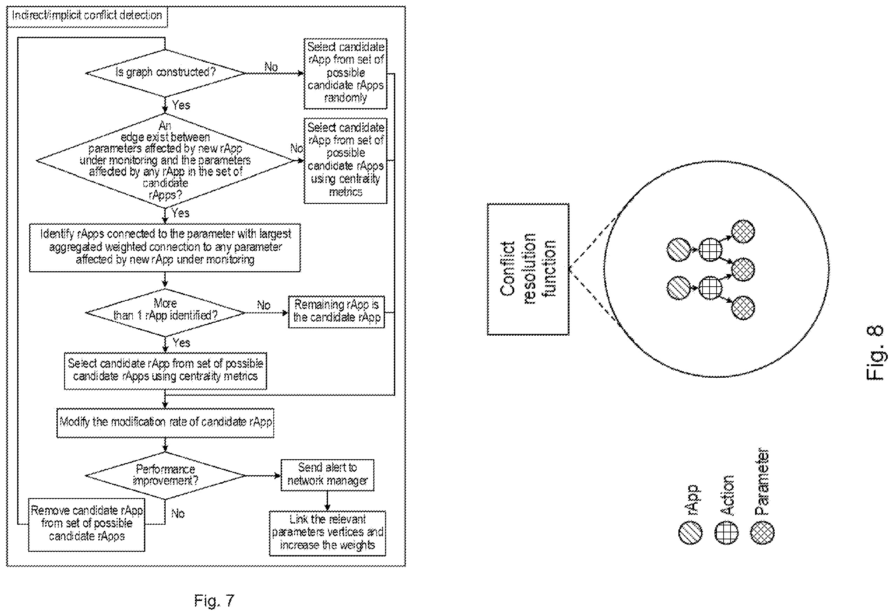

Figures 5 and 6 are flow charts illustrating a process flow for before and after deployment of a new rApp respectively. Figure 7 illustrates in greater detail how one of the steps in Figure 6 may be implemented. The process flows of Figures 5, 6 and 7 illustrate one way in which the methods 100 and 200 described above may be implemented. In the following discussion of Figures 5 to 7, the implementation of the methods 100, 200 is described with reference to two distinct phases, a first, pre-deployment phase (steps 202 to 218 of method 200), and a second, post-deployment phase (steps 120 to 190 of method 100, and 220 to 294 of method 200).

### Phase 1: Prior to deployment of the new rApp (Figure 5)

**RApp information and graph maintenance (steps 204 and 206 of method 200):** The documentation of the new rApp under evaluation is mined to identify the actions and network parameter changes that the new rApp under evaluation may execute. The documentation mining could be performed with the support of machine learning methods such as named entity recognition, or by using known document templates to identify the fields of interest. Such information is added to a graph maintained within the conflict resolution function. Figure 8 illustrates a simple representation of an example graph maintained within the management node in the conflict resolution function. As illustrated in Figure 8, the graph contains a representation of the rApps and the actions executed, and parameters modified, by each rApp.

**Network information gathering (step 208 of method 200):** The management node of the conflict resolution function stores network information and states. Specifically, the management node stores at least a) the inputs necessary to execute the new rApp under evaluation, and b) the inputs and/or the outputs to of the other rApps deployed. In some examples, this process may be performed before or after the rApp information and graph maintenance steps above.

**Direct conflict check (steps 210, 210bi, 210bii of method 200):** The network information and states previously stored are provided as inputs at least to the new rApp under evaluation in a test mode. The management node will identify conflicts prior to the actual deployment of the new rApp under evaluation based on the outputs of the new rApp under evaluation and the outputs of the rApps deployed.

**Indirect and implicit conflict check (steps 210, 210ai to 210aiii of method 200):** The management node will identify conflicts prior to the actual deployment of the new rApp under evaluation based on the information contained in the graph (edge connections between parameters changed by the new rApp and parameters changed by rApps already deployed in the network).

**Predicted conflict alert (steps 212, 214, 216, 218 of method 200):** If a potential conflict is detected, the management node of the conflict resolution function will communicate the conflict to a network manager. The network manager may adopt a variety of options to address the conflict such as
**a)** Sending a warning message to the network operator, including information on which rApps are causing the conflict. The operator can then choose to abort the deployment or not.
**b)** Automatically aborting the deployment.

If no conflict is detected, or following appropriate resolution action, the rApp will continue to the deployment phase.

### Phase 2: After deployment of the new rApp (Figures 6 and 7)

**Performance degradation (step 130 of method 100 and step 230 of method 200):** A network performance monitoring function evaluates the network performance. Upon detection of a performance degradation in the network not previously observed, the network performance monitoring function infers that the degradation is caused by the execution of the new rApp under evaluation.

In some examples, a minimum temporal gap between the deployment of two rApps may be enforced, so as to facilitate the identification of the rApp potentially causing the conflict. In further examples, the network performance monitoring function for the purposes of detecting conflicts that appear as a consequence of the introduction of a new rApp will be executed for a given duration of time.

The management node then proceeds to identify the rApp that is generating the conflict with the new rApp under monitoring:
**Candidate rApp selection (step 140 of method 100 and steps 240, 241 to 249 of method 200):** Initially, if the graph is being or not yet constructed, the management node will randomly choose a candidate rApp, and may choose one or more actions within the rApp, to determine whether the chosen rApp is the one generating the conflict. Alternatively, if the graph is already built, the conflict resolution function will select the rApp, and action within the rApp, that are most likely to be generating the conflict based on previous observations.

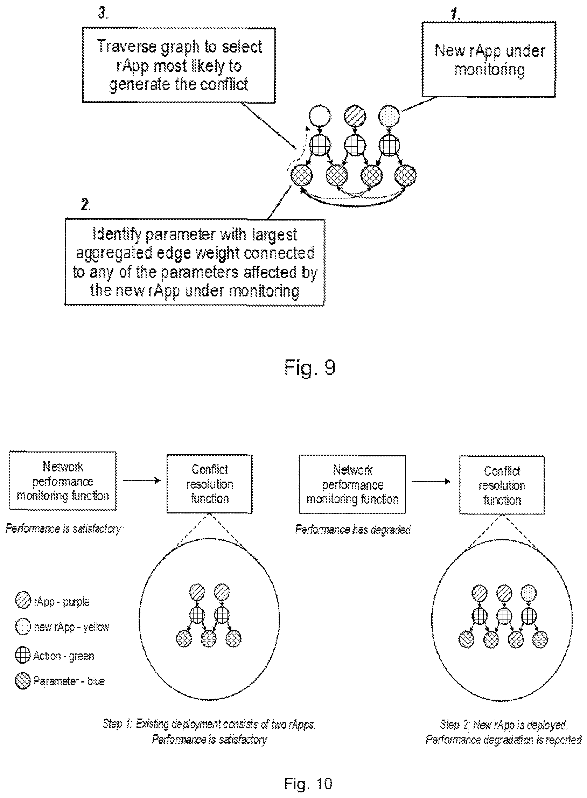

In some examples, the rApp most likely to be generating the conflict is selected by traversing the graph, starting from the parameter with the highest aggregated weighted connection to any parameter affected by the new rApp under monitoring. This graph traversal is illustrated in Figure 9. If there are multiple candidate rApps, or if no information about historical conflicts is stored in the edge weights of the graph, i.e., no edges exist between any parameter affected by the new rApp under monitoring and any parameter affected by the set of possible candidate rApps, the rApp could be chosen using graph centrality metrics such as closeness centrality or betweenness centrality.

**Rate modification of candidate rApp (step 150 of method 100 and steps 250, 250a, 250b of method 200):** The management node enforces a modification of the rate at which the selected candidate rApp, and action within the rApp, modify the associated or relevant network parameters. The duration of the rate modification could either be specified by a standard, could be an adjustable parameter for each rApp, or could be an adjustable parameter in the management node of the conflict resolution function.

In some examples, the rate modification may be implemented by triggering a new operational mode in the candidate rApp. In other examples, the rate modification may be implemented by letting the conflict resolution function directly control the flow of actions executed by the candidate rApp.

**Monitoring impact of rate modification (step 160 of method 100 and step 260 of method 200):** The network performance monitoring function re-evaluates network performance. If there exists a conflict between the new rApp under evaluation and the candidate rApp, a noticeable performance improvement should be observed. In some examples, the performance of the network without the new rApp under evaluation and when the candidate rApp modifies the rate at which it modifies the associated/relevant network parameters may also have to be evaluated to clearly identify that the original performance degradation was produced by an implicit or indirect conflict.

**Conflict notification (steps 170, 180 of method 100 and steps 270, 272, 280, 292, 294 of method 200):** If a noticeable performance improvement is not observed, the management node excludes the candidate rApp from the set of possible candidate rApps prior to selection and evaluation of a new candidate rApp. If a noticeable performance improvement is observed, the management node may infer that the candidate rApp and new rApp under evaluation are causing an indirect or an implicit conflict. The management node therefore alerts the network manager as discussed above.

**Graph updating (step 190 of method 100 and step 290 of method 200):** For the new candidate rApp and new rApp under evaluation, the management node updates the graph by linking the relevant parameter vertices and increasing the weights of the edges connecting them. The management node may infer that parameters whose vertices (nodes) are linked by edges with higher weights are more likely to lead to implicit conflict in the future, and may use this insight to predict future conflicts. In some examples, the weight increase may be a function of the severity of the performance degradation.

Figures 10, 11 and 12 illustrate an implementation of the post deployment phase of the process flow discussed above, with reference to a simplified example graph of rApps.

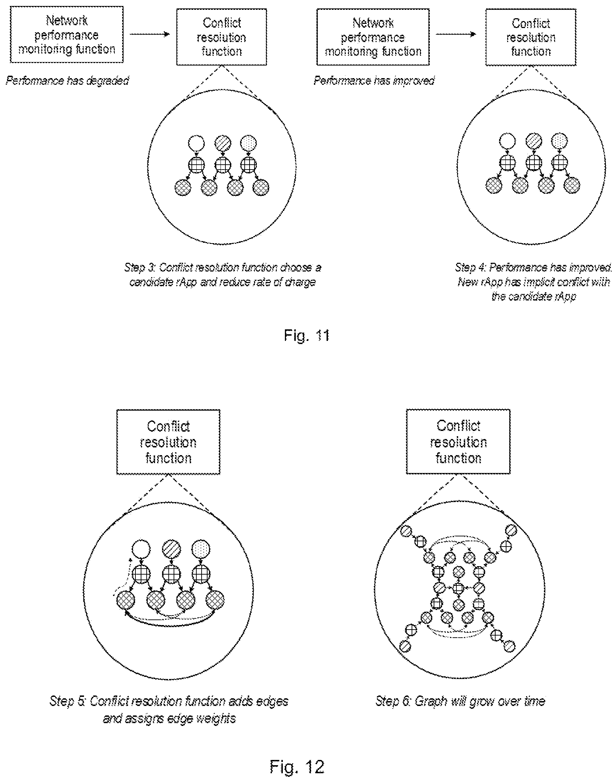

On the left of Figure 10, in an initial state, two rApps are deployed in the network and performance is satisfactory. On the right of Figure 10, a new rApp has been deployed and its information added to the graph, performance degrades. On the left of Figure 11, a candidate rApps is selected from the graph, and rate of execution of the candidate rApp action is modified. On the right of Figure 11, performance has improved, meaning the candidate rApp was the source of the conflict with the new rApp. On the left of Figure 12, edges are added to the graph between the relevant parameter nodes, and the weights of the new edges are incremented. The right of Figure 11 illustrates how the graph may grow with addition of new rApps and new edges as conflicts are detected.

Using the intuition that the larger an edge weight is, the higher the risk of an indirect or implicit conflict, the graph can be used to proactively estimate risk of indirect or implicit conflicts prior to any new rApp deployment. The knowledge of historical conflicts can also over time be used to answer questions such as which type of parameters / rApps / actions are most prone to conflicts, by examining the edge weights and centrality of the nodes.

Examples of the present disclosure thus provide a management method for conflict mitigation that is operable to manage rApp conflicts both before and after deployment of a new rApp. Prior to the deployment of a new or updated rApp, examples of the method disclosed herein can use a graph that includes information on previous network states and rApp conflicts to identify and prevent the deployment of conflicting rApps. After deployment of a new or updated rApp, examples of the method disclosed herein purposely modify the behavior of deployed rApps in order to identify and address indirect and implicit conflicts, and also construct a graph that includes information on network states and rApp conflicts.

According to examples of the present disclosure, upon selection of a candidate conflicting rApp, example methods of the present disclosure modify the rate at which the candidate rApp modifies the associated network parameters. This enables the identification of indirect and implicit conflicts. The methods also involve the construction and maintenance of a graph that relates the parameters configured by each of the executed rApps. This graph is continuously updated upon the detection of rApps conflicts. Using this graph, upon detection of a performance degradation after a new rApp is introduced, candidate rApps most likely to be generating the conflict, based on previous conflict occurrences, can be identified.

Example methods according to the present disclosure enable the management, including detection, of direct, indirect, and implicit rApp conflicts both prior to and following the deployment phase of a new rApp.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims or numbered embodiments. The word "comprising" does not exclude the presence of elements or steps other than those listed in a claim or embodiment, "a" or "an" does not exclude a plurality, and a single processor or other unit may fulfil the functions of several units recited in the claims or numbered embodiments. Any reference signs in the claims or numbered embodiments shall not be construed so as to limit their scope.

## Claims

1. A method (100) for managing conflicts between Radio Access Network Automation Applications, rApps, in a communication network, wherein an rApp is configured to execute at least one action on at least one parameter within the communication network, the method, performed by a management node, comprising:
on fulfilment of a network performance degradation condition (130) following deployment of a new rApp in the network:
selecting a candidate rApp from among rApps previously deployed in the network (140);
during a first time period, modifying a rate at which the candidate rApp can execute one or more candidate actions on parameters in the network (150);
comparing a measure of network performance during the first time period to a measure of network performance during at least one reference time period (160); and
if a network performance improvement condition is satisfied with respect to the measure of network performance during the at least one reference time period (170):
generating an rApp conflict alert identifying the new rApp and the candidate rApp (180); and
in a graph of rApps in the network, incrementing a weight of edges connecting nodes representing parameters on which actions of the new rApp are executed and nodes representing parameters on which the one or more candidate actions are executed (190).

2. A method as claimed in claim 1, wherein the wherein the graph of rApps in the network comprises (206a):
nodes representing rApps deployed in the network;
nodes representing actions executed by rApps in the network;
nodes representing network parameters on which actions are executed;
edges connecting rApp nodes to action nodes representing actions that the rApp nodes execute; and
edges connecting action nodes to nodes representing parameters on which they are executed.

3. A method as claimed in claim 1 or 2, further comprising initiating the graph of rApps in the network.

4. A method as claimed in any one of claims 1 to 3, further comprising:
selecting the one or more candidate actions of the candidate rApp.

5. A method as claimed in any one of claims 1 to 4, further comprising:
if a network performance improvement condition is not satisfied with respect to the measure of network performance during the at least one reference time period:
selecting at least one of a new candidate action executed by the candidate rApp, or a new candidate rApp (272); and
repeating remaining steps of the method.

6. A method as claimed in any one of the preceding claims, wherein modifying a rate at which the candidate rApp can execute the one or more candidate actions on parameters in the network comprises reducing the rate (250a).

7. A method as claimed in any one of the preceding claims, wherein modifying a rate at which the candidate rApp can execute one or more candidate actions on parameters in the network comprises modifying the rate by a degree that is based on at least one of (250b):
a characteristic of the candidate rApp;
a predicted impact on the network of the modification;
a severity of the performance degradation.

8. A method as claimed in any one of the preceding claims, wherein selecting a candidate rApp from among rApps previously deployed in the network, comprises:
if the graph of rApps in the network has not yet been initiated (241), selecting the candidate rApp at random (242);
otherwise, using the graph of rApps in the network to select the candidate rApp that has a highest probability of causing a conflict with the new rApp (243).

9. A method as claimed in claim 8, wherein using the graph of rApps in the network to select the candidate rApp that has a highest probability of causing a conflict with the new rApp comprises:
if at least one edge exists in the graph connecting a node representing a parameter on which an action of the new rApp is executed to a node representing a parameter on which an action of another rApp in the network is executed (244), selecting the candidate rApp according to a highest weighted connection between nodes representing parameters on which actions of the candidate rApp are executed and any node representing a parameter on which actions of the new rApp are executed (246).

10. A method as claimed in claim 8, wherein using the graph of rApps in the network to select the candidate rApp that has a highest probability of causing a conflict with the new rApp comprises:
selecting as the candidate rApp the rApp having the highest aggregated edge weight connection with the new rApp (247).

11. A method as claimed in claim 9 or 10, wherein using the graph of rApps in the network to select the candidate rApp that has a highest probability of causing a conflict with the new rApp comprises:
if more than one rApp has the highest aggregated edge weight connection with the new rApp (248), using a graph centrality metric to select the candidate rApp from among the rApps having the highest aggregated edge weight connection with the new rApp (249).

12. A method as claimed in any one of claims 8 to 11 wherein using the graph of rApps in the network to select the candidate rApp that has a highest probability of causing a conflict with the new rApp comprises:
if no edge exists in the graph connecting a node representing a parameter on which an action of the new rApp is executed to a node representing a parameter on which an action of another rApp in the network is executed (244), selecting the candidate rApp according to a graph centrality metric (245).

13. A method as claimed in any one of the preceding claims, wherein incrementing a weight of edges connecting nodes representing parameters on which actions of the new rApp are executed and nodes representing parameters on which the one or more candidate actions are executed comprises:
if no edge exists in the graph connecting a node representing a parameter on which an action of the new rApp is executed and a node representing a parameter on which the one or more of the candidate actions are executed (291), creating an edge between the nodes (292).

14. A method as claimed in any one of the preceding claims, wherein incrementing a weight of edges connecting nodes representing parameters on which actions of the new rApp are executed and nodes representing parameters on which the one or more candidate actions are executed comprises:
increasing the weight by an incrementation amount, wherein the incrementation amount is a function of a severity of the performance degradation (293).

15. A method as claimed in any one of the preceding claims, further comprising performing at least one of:
reporting conflict alert to a network management entity (216, 292);
taking an action to address the conflict of the alert (218, 294).

16. A computer program product comprising a computer readable medium, the computer readable medium having computer readable code embodied therein, the computer readable code being configured such that, on execution by a suitable computer or processor, the computer or processor is caused to perform a method of any one of claims 1 to 15.

17. A management node (300) for managing conflicts between Radio Access Network Automation Applications, rApps, in a communication network, wherein an rApp is configured to execute at least one action on at least one parameter within the communication network, the management node comprising processing circuitry configured to cause the management node to:
on fulfilment of a network performance degradation condition following deployment of a new rApp in the network:
select a candidate rApp from among rApps previously deployed in the network;
during a first time period, modify a rate at which the candidate rApp can execute one or more candidate actions on parameters in the network;
compare a measure of network performance during the first time period to a measure of network performance during at least one reference time period; and
if a network performance improvement condition is satisfied with respect to the measure of network performance during the at least one reference time period:
generate an rApp conflict alert identifying the new rApp and the candidate rApp; and
in a graph of rApps in the network, increment a weight of edges connecting nodes representing parameters on which actions of the new rApp are executed and nodes representing parameters on which the one or more candidate actions are executed.

## Patentansprüche

1. Verfahren (100) zur Konfliktverwaltung zwischen Anwendungen zur Funkzugangsnetzwerkautomatisierung, rApps, in einem Kommunikationsnetzwerk, wobei eine rApp so konfiguriert ist, dass sie mindestens eine Aktion an mindestens einem Parameter innerhalb des Kommunikationsnetzwerks ausführt, wobei das Verfahren von einem Verwaltungsknoten durchgeführte wird, umfassend:
bei Erfüllung einer Verschlechterungsbedingung von Netzwerkleistung (130) nach Einsatz einer neuen rApp im Netzwerk:
Auswählen einer Kandidaten-rApp unter zuvor im Netzwerk (140) eingesetzten rApps;
während eines ersten Zeitraums, Modifizieren einer Rate, mit der die Kandidaten-rApp eine oder mehrere Kandidatenaktionen an Parametern im Netzwerk (150) ausführen kann;
Vergleichen eines Maßes von Netzwerkleistung während des ersten Zeitraums mit einem Maß von Netzwerkleistung während mindestens eines Referenzzeitraum (160); und
wenn eine Verbesserungsbedingung von Netzwerkleistung in Bezug auf das Maß von Netzwerkleistung während mindestens eines Referenzzeitraums (170) erfüllt ist:
Generieren einer rApp-Konfliktwarnung, die die neue rApp und die Kandidaten-rApp (180) identifiziert; und
in einem Graphen von rApps im Netzwerk, Erhöhen einer Gewichtung von Kanten, die Knoten verbinden, die Parameter darstellen, an denen Aktionen der neuen rApp ausgeführt werden, und Knoten, die Parameter darstellen, an denen die eine oder die mehreren Kandidatenaktionen (190) ausgeführt werden.

2. Verfahren nach Anspruch 1, wobei der Graph von rApps im Netzwerk (206a) Folgendes umfasst:
Knoten, die im Netzwerk eingesetzte rApps darstellen;
Knoten, die Aktionen darstellen, die von rApps im Netzwerk ausgeführt werden;
Knoten, die Netzwerkparameter darstellen, an denen Aktionen ausgeführt werden;
Kanten, die rApp-Knoten mit Aktionsknoten verbinden, die die Aktionen darstellen, die die Knoten ausführen; und
Kanten, die Aktionsknoten mit Knoten verbinden, die Parameter darstellen, an denen sie ausgeführt werden.

3. Verfahren nach Anspruch 1 oder 2, das weiter Initiieren des Graphen von rApps im Netzwerk umfasst.

4. Verfahren nach einem der Ansprüche 1 bis 3, das weiter Folgendes umfasst: Auswählen der einen oder mehreren Kandidatenaktionen der Kandidaten-rApp.

5. Verfahren nach einem der Ansprüche 1 bis 4, das weiter Folgendes umfasst:
wenn eine Verbesserungsbedingung von Netzwerkleistung in Bezug auf das Maß von Netzwerkleistung während mindestens eines Referenzzeitraums nicht erfüllt ist:
Auswählen von mindestens einem von einer neuen Kandidatenaktion, die durch die Kandidaten-rApp ausgeführt wird, oder einer neuen Kandidaten-rApp (272); und
Wiederholen der übrigen Schritte des Verfahrens.

6. Verfahren nach einem der vorstehenden Ansprüche, wobei Modifizieren der Rate, mit der die Kandidaten-rApp die eine oder die mehreren Kandidatenaktionen an Parametern im Netzwerk ausführen kann, Reduzieren der Rate (250a) umfasst.

7. Verfahren nach einem der vorstehenden Ansprüche, wobei Modifizieren der Rate, mit der die Kandidaten-rApp eine oder mehrere Kandidatenaktionen an Parametern im Netzwerk ausführen kann, Modifizieren der Rate um einen Grad umfasst, der auf mindestens einem basiert von (250b):
einer Charakteristik des Kandidaten rApp;
einer vorhergesagten Auswirkung der Modifikation auf das Netzwerk;
einer Schwere der Leistungsverschlechterung.

8. Verfahren nach einem der vorstehenden Ansprüche, wobei Auswählen einer Kandidaten-rApp unter rApps, die zuvor im Netzwerk eingesetzt wurden, Folgendes umfasst:
wenn der Graph von rApps im Netzwerk noch nicht initiiert (241) wurde, zufälliges Auswählen der Kandidaten-rApp (242);
andernfalls Verwenden des Graphen von rApps im Netzwerk zum Auswählen der Kandidaten-rApp, die eine höchste Wahrscheinlichkeit aufweist, einen Konflikt mit der neuen rApp (243) zu verursachen.

9. Verfahren nach Anspruch 8, wobei Verwenden des Graphen von rApps im Netzwerk zum Auswählen der rApp, die eine höchste Wahrscheinlichkeit aufweist, einen Konflikt mit der neuen rApp zu verursachen, Folgendes umfasst:
wenn mindestens eine Kante im Graphen, die einen Knoten, der einen Parameter darstellt, an dem eine Aktion der neuen rApp ausgeführt wird, mit einem Knoten verbindet, der einen Parameter darstellt, an dem eine Aktion einer anderen rApp im Netzwerk ausgeführt wird (244), Auswählen der Kandidaten-rApp gemäß einer höchsten gewichteten Verbindung zwischen Knoten, die Parameter darstellen, an denen Aktionen der Kandidaten-rApp ausgeführt werden(246).

10. Verfahren nach Anspruch 8, wobei Verwenden des Graphen von rApps im Netzwerk zum Auswählen der rApp, die eine höchste Wahrscheinlichkeit aufweist, einen Konflikt mit der neuen rApp zu verursachen, Folgendes umfasst:
Auswählen als die Kandidaten-rApp der rApp, die die höchste aggregierte Kantengewichtungsverbindung zur neuen rApp (247) aufweist.

11. Verfahren nach Anspruch 9 oder 10, wobei Verwenden des Graphen von rApps im Netzwerk zum Auswählen der rApp, die eine höchste Wahrscheinlichkeit aufweist, einen Konflikt mit der neuen rApp zu verursachen, Folgendes umfasst:
wenn mehr als eine rApp die höchste aggregierte Kantengewichtungsverbindung mit der neuen rApp (248) aufweist, Verwenden einer Graph-Zentralitätsmetrik zum Auswählen der Kandidaten-rApp unter den rApps, die die höchste aggregierte Kantengewichtungsverbindung mit der neuen rApp (249) aufweisen.

12. Verfahren nach Anspruch 8 bis 11, wobei Verwenden des Graphen von rApps im Netzwerk zum Auswählen der rApp, die eine höchste Wahrscheinlichkeit aufweist, einen Konflikt mit der neuen rApp zu verursachen, Folgendes umfasst:
wenn keine Kante im Graphen existiert, die einen Knoten, der einen Parameter darstellt, an dem eine Aktion der neuen rApp ausgeführt wird, mit einem Knoten verbindet, der einen Parameter darstellt, an dem eine Aktion einer anderen rApp im Netzwerk ausgeführt wird (244), Auswählen der Kandidaten-rApp gemäß einer Graph-Zentralitätsmetrik (245).

13. Verfahren nach einem der vorstehenden Ansprüche, wobei Erhöhen einer Gewichtung von Kanten, die Knoten, die Parameter darstellen, an denen Aktionen der neuen rApp ausgeführt werden, und Knoten, die Parameter darstellen, an denen die eine oder mehreren Kandidatenaktionen ausgeführt werden, verbinden, Folgendes umfasst:
wenn keine Kante im Graphen existiert, die einen Knoten, der einen Parameter darstellt, an dem eine Aktion der neuen rApp ausgeführt wird, mit einem Knoten verbindet, der einen Parameter darstellt, an dem die eine oder die mehreren Kandidatenaktionen (291) ausgeführt werden, Erstellen einer Kante zwischen den Knoten (292).

14. Verfahren nach einem der vorstehenden Ansprüche, wobei Erhöhen einer Gewichtung von Kanten, die Knoten, die Parameter darstellen, an denen Aktionen der neuen rApp ausgeführt werden, und Knoten, die Parameter darstellen, an denen die eine oder mehreren Kandidatenaktionen ausgeführt werden, verbinden, Folgendes umfasst:
Erhöhen der Gewichtung um ein Erhöhungsausmaß, wobei das Erhöhungsausmaß eine Funktion von Schwere der Leistungsverschlechterung (293) ist.

15. Verfahren nach einem der vorstehenden Ansprüche, weiter umfassend Durchführen von mindestens einem von:
Melden von Konfliktalarm an eine Netzwerksverwaltungsinstanz (216, 292);
Ergreifen einer Aktion, um den Konflikt der Warnung (218, 294) zu beheben.

16. Computerprogrammprodukt, umfassend ein computerlesbares Medium, wobei das computerlesbare Medium darin verkörperten computerlesbaren Code aufweist, wobei der computerlesbare Code so konfiguriert ist, dass er bei Ausführung durch einen geeigneten Computer oder Prozessor bewirkt, dass der Computer oder Prozessor ein Verfahren nach einem der Ansprüche 1 bis 15 durchführt.

17. Verwaltungsknoten (300) zur Konfliktverwaltung zwischen Anwendungen zur Funkzugangsnetzwerkautomatisierung, rApps, in einem Kommunikationsnetzwerk, wobei eine rApp so konfiguriert ist, dass sie mindestens eine Aktion an mindestens einem Parameter innerhalb des Kommunikationsnetzwerks ausführt, wobei der Verwaltungsknoten Verarbeitungsschaltung umfasst, die so konfiguriert ist, dass sie bewirkt, dass der den Verwaltungsknoten:
bei Erfüllung einer Verschlechterungsbedingung von Netzwerkleistung nach Einsatz einer neuen rApp im Netzwerk:
eine Kandidaten-rApp unter zuvor im Netzwerk eingesetzten rApps auswählt;
während eines ersten Zeitraums eine Rate modifiziert, mit der die Kandidaten-rApp eine oder mehrere Kandidatenaktionen an Parametern im Netzwerk ausführen kann;
ein Maß von Netzwerkleistung während des ersten Zeitraums mit einem Maß von Netzwerkleistung während mindestens eines Referenzzeitraum vergleicht; und
wenn eine Verbesserungsbedingung von Netzwerkleistung in Bezug auf das Maß von Netzwerkleistung während mindestens eines Referenzzeitraums erfüllt ist:
eine rApp-Konfliktwarnung generiert, die die neue rApp und die Kandidaten-rApp identifiziert; und
in einem Graphen von rApps im Netzwerk, eine Gewichtung von Kanten erhöht, die Knoten, die Parameter darstellen, an denen Aktionen der neuen rApp ausgeführt werden, und Knoten, die Parameter darstellen, an denen die eine oder die mehreren Kandidatenaktionen ausgeführt werden, verbinden.

## Revendications

1. Procédé (100) de gestion de conflits entre applications d'automatisation de réseau d'accès radio, rApp, dans un réseau de communication, dans lequel une rApp est configurée pour exécuter au moins une action sur au moins un paramètre au sein du réseau de communication, le procédé, mis en œuvre par un nœud de gestion, comprenant :
dès qu'une condition de dégradation de performances du réseau (130) est remplie, suite au déploiement d'une nouvelle rApp sur le réseau :
la sélection d'une rApp candidate parmi les rApp précédemment déployées sur le réseau (140) ;
au cours d'une première période, la modification d'une vitesse à laquelle la rApp candidate peut exécuter une ou plusieurs actions candidates sur les paramètres dans le réseau (150) ;
la comparaison d'une mesure de performances du réseau au cours de la première période à une mesure de performances du réseau au cours d'au moins une période de référence (160) ; et
si une condition d'amélioration des performances du réseau est satisfaite quant à la mesure des performances du réseau pendant la au moins une période de référence (170) :
la génération d'une alerte de conflit rApp identifiant la nouvelle rApp et la rApp candidate (180) ; et
dans un graphe de rApp dans le réseau, l'incrémentation d'un poids des arêtes reliant les nœuds représentant les paramètres sur lesquels les actions de la nouvelle rApp sont exécutées et les nœuds représentant les paramètres sur lesquels les une ou plusieurs actions candidates sont exécutées (190).

2. Procédé selon la revendication 1, dans lequel le graphe des rApp dans le réseau comprend (206a) :
des nœuds représentant les rApp déployées sur le réseau ;
des nœuds représentant les actions exécutées par les rApp sur le réseau ;
des nœuds représentant les paramètres du réseau sur lesquels les actions sont exécutées ;
des arêtes reliant les nœuds rApp aux nœuds d'action représentant les actions exécutées par les nœuds rApp ; et
des arêtes reliant les nœuds d'action aux nœuds représentant les paramètres sur lesquels ils sont exécutés.

3. Procédé selon la revendication 1 ou 2, comprenant en outre l'application du graphe des rApp dans le réseau.

4. Procédé selon l'une quelconque des revendications 1 à 3, comprenant en outre : la sélection des une ou plusieurs actions candidates de la rApp candidate.

5. Procédé selon l'une quelconque des revendications 1 à 4, comprenant en outre :
si une condition d'amélioration des performances du réseau n'est pas satisfaite quant à la mesure des performances du réseau pendant la au moins une période de référence :
la sélection d'au moins une nouvelle action candidate exécutée par la rApp candidate, ou une nouvelle la rApp candidate (272) ; et
la répétition des étapes restantes du procédé.

6. Procédé selon l'une quelconque des revendications précédentes, dans lequel la modification d'une vitesse à laquelle la rApp candidate peut exécuter les une ou plusieurs actions candidates sur les paramètres dans le réseau comprend la réduction de la vitesse (250a).

7. Procédé selon l'une quelconque des revendications précédentes, dans lequel la modification d'une vitesse à laquelle la rApp candidate peut exécuter une ou plusieurs actions candidates sur les paramètres dans le réseau comprend la modification de la vitesse d'un degré qui est basé sur au moins l'un des éléments suivants (250b) :
une caractéristique de la rApp candidate ;
un impact prévu de la modification sur le réseau ;
une gravité de la dégradation des performances.

8. Procédé selon l'une quelconque des revendications précédentes, dans lequel la sélection d'une rApp candidate parmi les rApp précédemment déployées sur le réseau comprend :
si le graphe des rApp dans le réseau n'a pas encore été appliqué (241), la sélection aléatoire de la rApp candidate (242) ;
dans le cas contraire, l'utilisation du graphe des rApp dans le réseau pour sélectionner la rApp candidate dont la probabilité de provoquer un conflit avec la nouvelle rApp est la plus forte (243).

9. Procédé selon la revendication 8, dans lequel l'utilisation du graphe des rApp dans le réseau pour sélectionner la rApp candidate présentant la plus forte probabilité de provoquer un conflit avec la nouvelle rApp comprend :
si au moins une arête existe dans le graphe reliant un nœud représentant un paramètre sur lequel une action de la nouvelle rApp est exécutée à un nœud représentant un paramètre sur lequel une action d'une autre rApp dans le réseau est exécutée (244), la sélection de la rApp candidate en fonction d'une connexion pondérée la plus élevée entre les nœuds représentant les paramètres sur lesquels les actions de la rApp candidate sont exécutées et tout nœud représentant un paramètre sur lequel les actions de la nouvelle rApp sont exécutées (246).

10. Procédé selon la revendication 8, dans lequel l'utilisation du graphe des rApp dans le réseau pour sélectionner la rApp candidate présentant la plus forte probabilité de provoquer un conflit avec la nouvelle rApp comprend :
la sélection, en tant que rApp candidate, de la rApp présentant la connexion pondérée d'arêtes agrégése la plus élevée avec la nouvelle rApp (247).

11. Procédé selon la revendication 9 ou 10, dans lequel l'utilisation du graphe des rApp dans le réseau pour sélectionner la rApp candidate présentant la plus forte probabilité de provoquer un conflit avec la nouvelle rApp comprend :
si plus d'une rApp présente la connexion pondérée d'arêtes agrégées la plus élevée avec la nouvelle rApp (248), l'utilisation d'une mesure de centralité de graphe pour sélectionner la rApp candidate parmi les rApp présentant la connexion pondérée d'arêtes agrégées la plus élevée avec la nouvelle rApp (249).

12. Procédé selon l'une quelconque des revendications 8 à 11, dans lequel l'utilisation du graphe des rApp dans le réseau pour sélectionner la rApp candidate présentant la plus forte probabilité de provoquer un conflit avec la nouvelle rApp comprend :
si aucune arête n'existe dans le graphe reliant un nœud représentant un paramètre sur lequel une action de la nouvelle rApp est exécutée à un nœud représentant un paramètre sur lequel une action d'une autre rApp dans le réseau est exécutée (244), la sélection de la rApp candidate selon une mesure de centralité de graphe (245).

13. Procédé selon l'une quelconque des revendications précédentes, dans lequel l'incrémentation d'un poids des arêtes reliant les nœuds représentant les paramètres sur lesquels les actions de la nouvelle rApp sont exécutées et les nœuds représentant les paramètres sur lesquels les une ou plusieurs actions candidates sont exécutées comprend :
s'il n'existe aucune arête dans le graphe reliant un nœud représentant un paramètre sur lequel une action de la nouvelle rApp est exécutée et un nœud représentant un paramètre sur lequel les une ou plusieurs des actions candidates sont exécutées (291), la création d'une arête entre les nœuds (292).

14. Procédé selon l'une quelconque des revendications précédentes, dans lequel l'incrémentation d'un poids des arêtes reliant les nœuds représentant les paramètres sur lesquels les actions de la nouvelle rApp sont exécutées et les nœuds représentant les paramètres sur lesquels les une ou plusieurs actions candidates sont exécutées comprend :
l'augmentation du poids d'une quantité incrémentale, dans lequel la quantité incrémentale dépend d'une gravité de la dégradation des performances (293).

15. Procédé selon l'une quelconque des revendications précédentes, comprenant en outre la réalisation d'au moins l'une parmi :
la communication d'une alerte de conflit à une entité de gestion de réseau (216, 292) ;
la prise d'une mesure pour régler le conflit de l'alerte (218, 294).

16. Produit de programme informatique comprenant un support lisible par ordinateur, le support lisible par ordinateur présentant un code lisible par ordinateur incorporé dans celui-ci, le code lisible par ordinateur étant configuré de sorte que, lors de l'exécution par un ordinateur ou processeur approprié, l'ordinateur ou le processeur soit amené à réaliser un procédé selon l'une quelconque des revendications 1 à 15.

17. Nœud de gestion (300) pour la gestion des conflits entre applications d'automatisation de réseau d'accès radio, rApp, dans un réseau de communication, dans lequel une rApp est configurée pour exécuter au moins une action sur au moins un paramètre au sein du réseau de communication, le nœud de gestion comprenant des circuits de traitement configurés pour amener le nœud de gestion à :
dès qu'une condition de dégradation des performances du réseau est remplie, suite au déploiement d'une nouvelle rApp sur le réseau :
sélectionner une rApp candidate parmi les rApp précédemment déployées sur le réseau ;
au cours d'une première période, modifier une vitesse à laquelle la rApp candidate peut exécuter une ou plusieurs actions candidates sur les paramètres dans le réseau ;
comparer une mesure de performances du réseau au cours de la première période à une mesure de performances du réseau au cours d'au moins une période de référence ; et
si une condition d'amélioration des performances du réseau est satisfaite quant à la mesure des performances du réseau pendant la au moins une période de référence :
générer une alerte de conflit rApp identifiant la nouvelle rApp et la rApp candidate ; et
dans un graphe de rApp dans le réseau, incrémenter un poids des arêtes reliant les nœuds représentant les paramètres sur lesquels les actions de la nouvelle rApp sont exécutées et les nœuds représentant les paramètres sur lesquels les une ou plusieurs actions candidates sont exécutées.
